# EUROPEAN PATENT APPLICATION

(11) **EP 4 510 153 A1**
(43) Date of publication of application: **19.02.2025**
(21) Application number: 23819602.6
(22) Date of filing: 16.05.2023
(51) Int. Cl.: H01F 7/06, H01F 7/18, H02K 33/18

(54) **LVDT-BUILT-IN LINEAR MOTOR**

(30) Priority: 09.06.2022 JP 2022093698
(71) Applicant: Yuken Kogyo Co., Ltd., Ayase-shi, Kanagawa 252-1113 (JP)
(72) Inventor: NEGISHI, Akira, Yamato-shi, Kanagawa 242-0013 (JP); NAGANO, Taku, Yokosuka-shi, Kanagawa 238-0315 (JP)
(74) Representative: Richly & Ritschel Patentanwälte PartG mbB
(86) International application number: PCT/JP2023/018296
(87) International publication number: WO 2023/238618

(57) **Abstract**

In a linear motor that drives a drive unit of a hydraulic device so as to cause the drive unit to reciprocate, a permanent magnet is divided into two in a longitudinal direction and includes a first magnet on a proximal side of the hydraulic device and a second magnet on a distal side of the hydraulic device, a first coil and a second coil that are formed by winding coil wires in opposite directions are provided, an LVDT case member in which solenoid coils constituting an LVDT in a region in front of an end of the first magnet closer to the hydraulic device are built is projected at an end of an inner yoke on the hydraulic device side, a core of the LVDT that linearly moves together with the bobbin inside the solenoid coils is coupled to a protrusion extending in a substantially cone shape from an edge of a cylindrical body of the bobbin, and a magnetic ring made of a soft magnetic material and disposed in contact with the end of the first magnet closer to the hydraulic device is further provided.

## Description

### Technical Field

The present invention relates to a linear motor that drives a spool of a linear motion servo valve in an axial direction thereof, and more particularly a linear motor having, built therein, an LVDT serving as a spool position detector and capable of suppressing an effect of a magnetic flux of a permanent magnet.

### Background Art

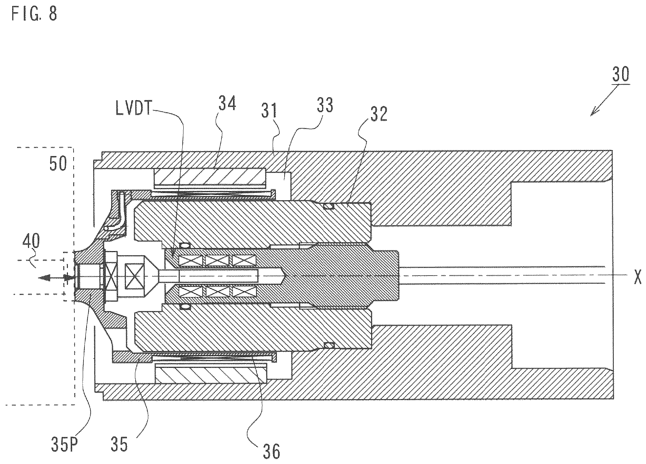

Conventionally, for a linear motion servo valve that is small in size and requires high responsiveness, a linear motor with a cylindrical voice coil, a so-called voice coil motor (VCM), has been used as a drive source for a spool. As illustrated in Fig. 8, in general, in such a linear motor, a cylindrical permanent magnet 34 fixed inside an outer yoke 31, a bobbin 35 made of a non-magnetic material and disposed inside the permanent magnet 34 and outside an inner yoke 32, and a cylindrical coil 36 wound around an outer circumference of the bobbin 35 are arranged coaxially in an annular space 33 between a cylindrical outer cylinder member (outer yoke) 31 and the inner yoke 32 installed coaxially in a center portion of the outer yoke. Due to thrust generated by passing a current through the coil 36 in a magnetic field generated by the permanent magnet 34, the coil 36 moves linearly along the central axis X direction together with the bobbin 35 as a movable element (moving coil). Therefore, a spool 40 coupled to a tip of a cone-shaped protrusion 35P extending from a cylindrical body of the bobbin 35 is linearly moved within a sleeve of a valve body 50, each port provided in the valve body 50 is switched between opening and closing, and communication between the ports is switched.

According to the linear motor, since an inductance component for magnetizing an iron core in the coil that is a movable part is not required, compared with a case where an iron core is uses as a movable element, response to a current is high, the spool coupled to the bobbin is linearly moved, and thus the linear motor has better operational responsiveness than other actuators, and is capable of high-speed drive and highly accurate positioning.

For the linear motion servo valve, a position detector for controlling the position of the spool is provided. Many position detectors use a linear variable differential transformer (LVDT) as a displacement sensor that detects the amount of displacement due to a mechanical linear motion. A general LVDT includes three solenoid coils: a central primary coil wound around a core, and secondary coils on both sides of the primary coil. When a core that interlocks with a spool moves within these coils in a state in which the primary coil is excited and an electromotive force is generated in each of the secondary coils, the mutual inductance of the two secondary coils corresponding to the primary coil changes according to the amount of the movement of the core. Therefore, by detecting the level change of the difference in voltage between the two secondary coils as output, the amount of displacement of the core, that is, the amount of movement of the spool can be measured. Therefore, the position of the spool determined based on the amount of the movement, and feedback control can be performed on the position of the spool.

However, when the magnetic displacement sensor is affected by a magnetic flux from the permanent magnet, a problem with the accuracy of the detection occurs, and thus an LVDT is installed on the opposite side of the spool with respect to the linear motor (for example, see Patent Literatures 1, 2, and 3).

### Citation List

### Patent Literature

Patent Literature 1: Japanese Unexamined Patent Application Publication No. Sho 62-278303
Patent Literature 2: Japanese Unexamined Patent Application Publication No. Sho 63-259203
Patent Literature 3: Japanese Unexamined Patent Application Publication No. 2007-187296
Patent Literature 4: Japanese Unexamined Patent Application Publication No. Hei 06-300007

### Summary of Invention

### Technical Problem

In a configuration in which a linear motor is disposed at one of both ends of a spool of a valve body and an LVDT is disposed at the other end, a device structure including wiring and the like is complex and handling is burdensome. Therefore, a configuration in which an LVDT is integrated with a cylindrical voice coil and disposed on one end side of a spool is considered (for example, see Patent Literature 4). In this case, compared with a case where both ends of the spool are constrained, the degree of freedom in the configuration of the valve body itself is improved.

When an LVDT-built-in linear motor in which an LVDT is integrated with a cylindrical voice coil is configured, first, as illustrated in a schematic vertical sectional diagram of Fig. 8, a configuration in which the LVDT is disposed in a hollow interior that is at the center of an inner yoke and is an area where there is little leakage of a magnetic flux was considered.

However, in a case where the size of the linear motor is to be reduced and the thrust of the linear motor is to be increased, when the density of a magnetic flux is improved in the cylindrical voice coil while the diameter of the cylindrical voice coil is suppressed, leakage of the magnetic flux into the inner yoke becomes significant, making it impossible to arrange the LVDT inside the center of the inner yoke. Therefore, for example, it is conceivable that a large intermediate block in which an LVDT is built between the yoke and the valve body is disposed, but this is contrary to a reduction in the size of the linear motor.

In view of the above-described problems, an object of the present invention is to provide a compact and high-thrust linear motor in which an LVDT can be built without being affected by leakage magnetic flux.

### Solution to Problem

To achieve the above-described object, an LVDT-built-in linear motor according to the invention described in claim 1 includes an exterior member and an inner yoke disposed at a center part of an inner space of the exterior member and coupled to the exterior member at an end, and in a space formed between the exterior member and the inner yoke, a permanent magnet fixed inside the exterior member, a bobbin made of a non-magnetic material and disposed on an inner side of the permanent magnet and an outer side of the inner yoke such that the bobbin is capable of linearly moving, and a coil wound around an outer circumference of the bobbin are arranged, and the linear motor linearly drives a drive unit of a hydraulic device so as to cause the drive unit to reciprocate via the bobbin that is linearly moved together with the coil by control of energization to the coil, and the inner space of the exterior member, the inner yoke, the bobbin, and the coil each have a substantially cylindrical shape and are arranged coaxially with each other, and the permanent magnet is divided into two in a longitudinal direction of the permanent magnet and one of which is a first magnet disposed on a proximal side of the hydraulic device and the other of which is a second magnet disposed on a distal side of the hydraulic device, and the coil includes a first coil and a second coil that are spaced apart from each other, and the first coil and the second coil are formed by winding coil wires in opposite directions, and the first magnet and the second magnet have magnetic pole directions opposite to each other in a radial direction, and the bobbin includes a cylindrical body having an outer circumference around which the first coil and the second coil are wound, and a protrusion that extends in a substantially cone shape from an edge of the cylindrical body and transmits the linear motion to the drive unit of the hydraulic device at a tip portion of the protrusion, and an LVDT case member in which solenoid coils constituting a linear variable differential transformer (LVDT) are built in a region in front of an end of the first magnet closer to the hydraulic device is projected at an end of the inner yoke on a hydraulic device side, and a core of the linear variable differential transformer that linearly moves inside the solenoid coils built in the LVDT case member as the bobbin linearly moves is coupled to the protrusion of the bobbin, and the linear motor further includes a magnetic ring made of a soft magnetic material and disposed in contact with the end of the first magnet closer to the hydraulic device.

In the LVDT-built-in linear motor according to the invention described in claim 2 is the LVDT-built-in linear motor according to the invention described in claim 1, a length of the first magnet is shorter than a length of the second magnet in the longitudinal direction of the cylindrical permanent magnet.

In the LVDT-built-in linear motor according to the invention described in claim 3 is the LVDT-built-in linear motor according to the invention described in claim 2, a division ratio of the first magnet and the second magnet in the longitudinal direction of the cylindrical permanent magnet is 35:65.

In the LVDT-built-in linear motor according to the invention described in claim 4 is the LVDT-built-in linear motor according to the invention described in any one of claims 1 to 3, the first magnet and the second magnet are each formed by combining a plurality of partial magnets magnetized in a predetermined direction in an annular shape in a circumferential direction.

### Advantageous Effects of Invention

According to an LVDT-built-in linear motor of the present invention, an effect of leakage magnetic flux on the LVDT can be suppressed well by arranging a magnetic ring made of a soft magnetic material at an end of a permanent magnet, and the LVDT can be built in a region adjacent to the permanent magnet without arranging a large intermediate block for LVDT arrangement that leads to an increase in the size of a device between a voice coil and a valve body. Therefore, an effect in which the linear motor can be downsized and can produce high thrust is obtained. Further, the effect of suppressing the influence of leakage magnetic flux to the LVDT due to the magnetic ring can be improved by appropriately making the proportion of the first magnet closer to the LVDT lower than that of the second magnet in the total length of the permanent magnet in the longitudinal direction of the permanent magnet.

### Brief Description of Drawings

Figs. 1 are schematic configuration diagrams of a linear motor according to an embodiment of the present invention, Fig. 1(a) is a side sectional view of a body part excluding a peripheral configuration such as wiring in a stroke neutral state of a voice coil, Fig. 1(b) is a diagram taken along a G-G arrow illustrated in Fig. 1(a) and is a sectional view illustrating an end surface of a second magnet, and Fig. 1(c) is a diagram taken along an F-F arrow illustrated in Fig. 1(a) and is an end surface diagram illustrating only a magnetic ring.

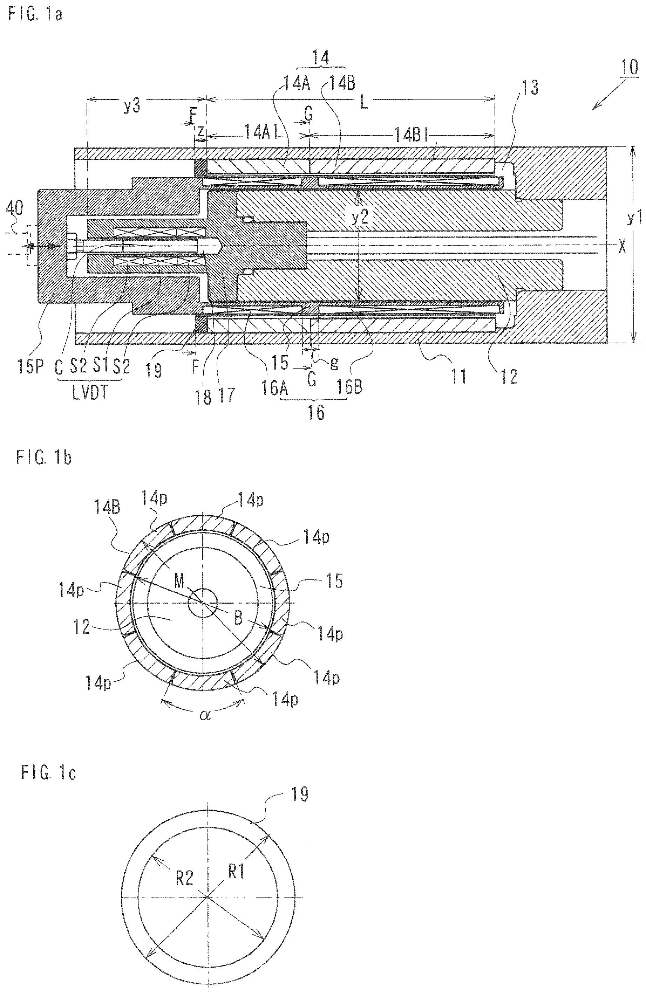

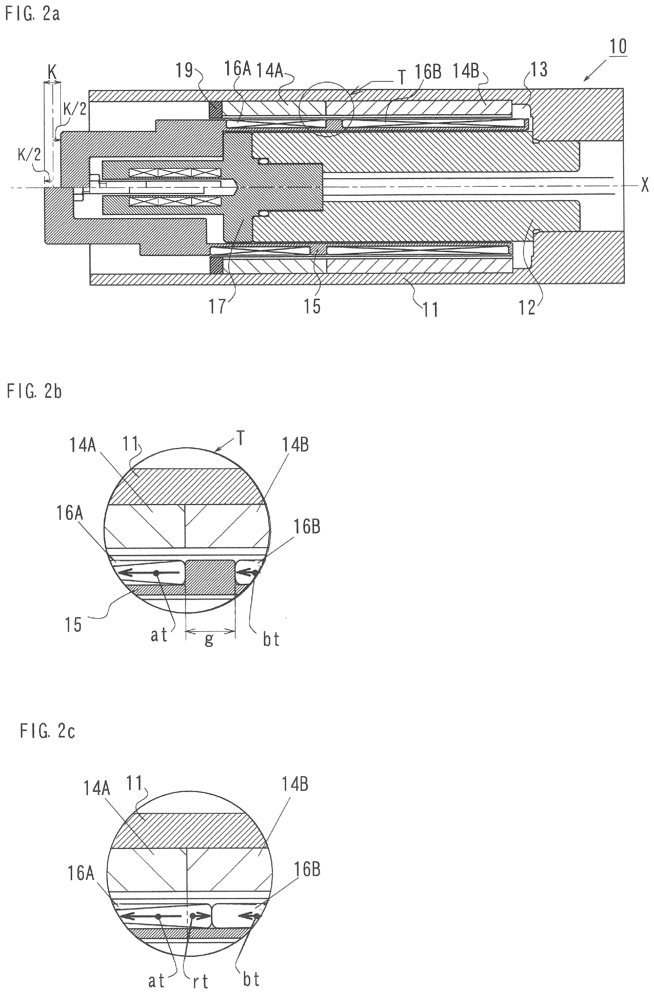

Fig. 2(a) is a side sectional view illustrating, in an upper part, a state in which a body part of the linear motor illustrated in Figs. 1 is moved rearward by a stroke distance of K/2 in an effective stroke length K of the body part of the linear motor and illustrating, in a lower part, a state in which the body part of the linear motor moves frontward by the stroke distance of K/2 in the effective stroke length K of the body part of the linear motor, Fig. 2(b) is a schematic enlarged view for explaining coil thrust in a gap g within a circle T illustrated in Fig. 2(a), and Fig. 2(c) is a schematic enlarged view for explaining coil thrust in a case where the gap g is not present as a comparative example for Fig. 2(b).
Fig. 3 is a schematic configuration diagram illustrating a linear motor in a case where a permanent magnet is divided into two equal parts in a longitudinal direction of the permanent magnet as a comparative example for the embodiment illustrated in Figs. 1.
Fig. 4(a) is a magnetic field distribution diagram of the linear motor illustrated in Figs. 1, and Fig. 4(b) is a magnetic field distribution diagram illustrating a case where a magnetic ring is not disposed as a comparative example for the linear motor illustrated in Figs. 1.
Fig. 5(a) is a magnetic field distribution diagram of the linear motor illustrated in Fig. 3, and Fig. 5(b) is a magnetic field distribution diagram illustrating a case where a magnetic ring is not disposed as a comparative example for the linear motor illustrated in Fig. 3.
Fig. 6 is a line graph in which a core stroke distance (mm) is plotted on a horizontal axis and output (V) is plotted on a vertical axis in an energized state (solid line) and a non-energized state (broken line) of a coil of the linear motor as LVDT characteristics of the linear motor illustrated in Figs. 1.
Fig. 7 is a line graph in which a core stroke distance (mm) is plotted on a horizontal axis and output (V) is plotted on a vertical axis in an energized state (solid line) and a non-energized state (broken line) of a coil of the linear motor in a case where a magnetic ring is not disposed as a comparative example for the linear motor illustrated in Figs. 1.
Fig. 8 is a schematic vertical sectional view illustrating a configuration of an example of a conventional LVDT-built-in linear motor.

### Description of Embodiments

According to the present invention, an LVDT-built-in linear motor includes: an exterior member; and an inner yoke disposed at a center part of an inner space of the exterior member, in a space formed between the exterior member and the inner yoke, a permanent magnet fixed inside the exterior member, a bobbin made of a non-magnetic material and disposed on an inner side of the permanent magnet and an outer side of the inner yoke such that the bobbin is capable of linearly moving, and a coil wound around an outer circumference of the bobbin are arranged, and the linear motor drives a drive unit of a hydraulic device so as to cause the drive unit to reciprocate via the bobbin that is linearly moved together with the coil by control of energization to the coil, the inner space of the exterior member, the inner yoke, the bobbin, and the coil each have a substantially cylindrical shape and are arranged coaxially with each other, the permanent magnet is divided into two in a longitudinal direction of the permanent magnet and one of which is a first magnet disposed on a proximal side of the hydraulic device and the other of which is a second magnet disposed on a distal side of the hydraulic device, the coil includes a first coil and a second coil that are spaced apart from each other, and the first coil and the second coil are formed by winding coil wires in opposite directions, and the first magnet and the second magnet have magnetic pole directions opposite to each other in a radial direction, and the bobbin includes a cylindrical body having an outer circumference around which the first coil and the second coil are wound, and a protrusion that extends in a substantially cone shape from an edge of the cylindrical body and transmits the linear motion to the drive unit of the hydraulic device at a tip portion of the protrusion, and an LVDT case member in which solenoid coils constituting a linear variable differential transformer (LVDT) are built in a region in front of an end of the first magnet closer to the hydraulic device is projected at an end of the inner yoke on a hydraulic device side, a core of the linear variable differential transformer that linearly moves inside the solenoid coils built in the LVDT case member as the bobbin linearly moves is coupled to the protrusion of the bobbin, and the linear motor further includes a magnetic ring made of a soft magnetic material and disposed in contact with the end of the first magnet closer to the hydraulic device.

A permanent magnet of a linear motor has a length sufficient to compensate for a movement region of a movable part in order to obtain a uniform magnetic field in a coil so as not to generate a fluctuation of thrust due to a change in the magnetic field. However, according to the configuration of the present invention described above, the permanent magnet is divided into two magnets, the first magnet and the second magnet, and polarities of the divided magnets are different. Therefore, a magnetic flux between the magnets having the different polarities increases more than a case where a magnetic flux having the same polarity passes through a yoke, and the density of the magnetic flux directed inward is improved compared with a case where the permanent magnet is not divided. Therefore, it is possible to improve thrust without increasing a cylindrical voice coil in size in the radial direction.

In addition, in this case, the first coil and the second coil made of coil wires and wound in opposite directions around the outer circumference of the bobbin in regions facing each other inside the two permanent magnets are provided. The first and second magnets corresponding to the first and second coils, respectively, have magnetic pole directions opposite to each other in the radial direction to form a magnetic circuit with each coil, and produce higher thrust than coils and magnets having the same polarity.

In the present invention, the linear variable differential transformer (hereinafter referred to as an LVDT) including the solenoid coils built in the LVDT case member projected at the end of the inner yoke on the hydraulic device side, and the core coupled to the protrusion of the bobbin is disposed in a region that is located in front of the end of the first magnet closer to the hydraulic device and at a position where the LVDT is most hardly affected by leakage magnetic flux of the permanent magnet, and the magnetic ring made of the soft magnetic material is disposed in contact with the end of the first magnet closer to the hydraulic device, that is, the end of the permanent magnet. Therefore, the magnetic ring functions as a magnetic shield and can further suppress an influence of leakage magnetic flux on the LVDT, a large intermediate block for arranging the LVDT between the voice coil and the valve body is not required, and the compact high-thrust linear motor that can secure excellent LVDT characteristics can be implemented.

The material of the magnetic ring of the present invention may be any soft magnetic material. However, in order to exhibit the effect of suppressing leakage magnetic flux, a material having a high magnetic permeability and a low coercive force is preferable. For example, permalloy may be used, but other materials such as free-cutting pure iron and carbon steel, which are lower in cost, are also suitable. In addition, the exterior member is a magnetic case that functions as an outer yoke by being made of the same type of soft magnetic material as the inner yoke.

As described above, in the present invention, the influence of leakage magnetic flux on the LVDT can be avoided by the magnetic ring disposed mainly at the end of the permanent magnet, but the effect of the avoidance can be further improved by reducing the influence from the first magnet. That is, the length of the first magnet may be made shorter than the length of the second magnet in the longitudinal direction of the permanent magnet.

The shorter the first magnet is, the higher the effect will be, but if the first magnet is too short, it will be difficult to secure sufficient thrust. Therefore, it is desirable to maintain a lower limit condition that most effectively ensures both sufficient thrust and the effect of suppressing the influence of leakage magnetic flux. This condition is a dimension setting in which in a case where the total length of the permanent magnet in the longitudinal direction of the permanent magnet is 100, the division ratio of the first magnet and the second magnet is 35:65.

The first magnet and the second magnet are annular magnets having magnetic pole directions in the radial direction. However, it is difficult to manufacture an integrated annular magnet that is magnetized to have a good high magnetic flux density in the radial direction. Therefore, the magnets may be manufactured using a simpler division method. That is, an unmagnetized hard magnetic body formed in an annular shape is divided into a plurality of equal parts in a circumferential direction, each divided part is magnetized in a radial direction in a predetermined direction, and an annular magnet can be made by combining the magnetized divided parts in an annular shape.

### Embodiment

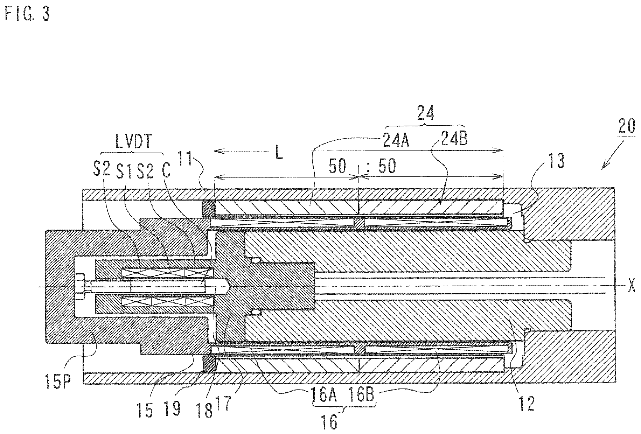

As an embodiment of the present invention, Figs. 1 illustrate schematic configuration diagrams of an LVDT-built-in linear motor in which an LVDT is integrated with a voice coil having two coils, a first coil and a second coil corresponding to a first magnet and a second magnet into which a permanent magnet is divided in a longitudinal direction. Fig. 1(a) is a side sectional view of a body part excluding a peripheral configuration such as wiring, Fig. 1(b) is a diagram taken along a G-G arrow illustrated in Fig. 1(a) and is a sectional view illustrating an end surface of the second magnet, and Fig. 1(c) is a diagram taken along an F-F arrow illustrated in Fig. 1(a) and is an end surface diagram illustrating only a magnetic ring. Fig. 3 illustrates, as a comparative example for the present embodiment, a schematic sectional view of a linear motor in a case where a division ratio of a first magnet and a second magnet in a longitudinal direction of a permanent magnet is different from that in the linear motor illustrated in Figs. 1.

The linear motor 10 according to the present embodiment includes, for example, an exterior member 11 having an inner space formed by hollowing out the inside of a prismatic member into a cylindrical shape, and a cylindrical inner yoke 12 arranged coaxially in a center part of the cylindrical inner space and coupled to the exterior member 11 at a rear end. An annular space 13 is formed between the exterior member 11 and the inner yoke 12. In the annular space 13, a cylindrical permanent magnet 14 fixed inside the exterior member 11, and a bobbin 15 made of a non-magnetic material and disposed on an inner side of the permanent magnet 14 and an outer side of the inner yoke 12 such that the bobbin 15 can linearly move in a central axis X direction are arranged coaxially. A voice coil is made by winding a coil 16, which forms a magnetic circuit with the permanent magnet 14, around an outer circumference of the bobbin 15 into a cylindrical shape.

Therefore, the linear motor 10 can reciprocate a drive unit, for example a spool, of a hydraulic device (not illustrated), such as a linear motion servo valve located on the left side of the drawing, via the bobbin 15 that is linearly moved along the central axis X direction together with the coil 16 by control of energization to the coil 16. In this case, the left side when viewing the drawing that is the hydraulic device side is regarded as the front side, and the right side when viewing the drawing is regarded as the rear side.

In the present embodiment, the permanent magnet 14 includes an annular first magnet 14A and an annular second magnet 14B divided in the longitudinal direction. The rear end of the first magnet 14A and the front end of the second magnet 14B are arranged in contact with each other. The corresponding coil 16 includes two coils, a first coil 16A and a second coil 16B. The first magnet 14A and the second magnet 14B have magnetic pole directions opposite to each other in the radial direction. The first coil 16A and the second coil 16B are formed by winding the same coil wire (not necessarily the same coil wire) around the outer circumference of the bobbin 15 in opposite directions into cylindrical shapes with a predetermined interval. In addition, each of the annular first magnet 14A and the annular second magnet 14B is formed by magnetizing divided parts 14p, which are obtained by dividing an annular member into eight equal parts (obtained by dividing at equal angular intervals α of approximately 44° in Fig. 1(b)) in the circumferential direction, in the radial direction in a predetermined direction and then assembling the divided parts 14p in an annular shape in the circumferential direction.

In addition, the bobbin 15 has a protrusion 15P extending in a substantially cone shape from a front edge of a cylindrical body having an outer circumference around which the first coil 16A and the second coil 16B are wound. By coupling a tip portion of the protrusion 15P to an end of the drive unit of the hydraulic device, a linear motion of the bobbin 15 is transmitted to the drive unit of the hydraulic device.

An LVDT case member 17 extending inside the protrusion 15P of the bobbin 15 is provided in a projecting shape at the front end of the inner yoke 12 on the hydraulic device side. In the LVDT case member 17, a hollow hole 18 is formed and extends along the central axis X, and three solenoid coils constituting an LVDT, that is, a primary coil S1 and two secondary coils S2 on both sides of the primary coil S1 are built coaxially with respect to the central axis X in a region in front of the front end of the first magnet 14A around the hollow hole 18. Meanwhile, a core C of the LVDT is coupled to the protrusion 15P of the bobbin 15 so as to extend toward the rear side coaxially with respect to the central axis X, and the core is configured to move linearly inside the hollow hole 18 of the LVDT case member 17, that is, inside the solenoid coils (S1, S2) as the bobbin 15 moves linearly.

Therefore, in the present embodiment, the LVDT is built in at a position where the influence of leakage magnetic flux in the region in front of the front end of the voice coil is minimal. In addition, the magnetic ring 19 made of the soft magnetic material is disposed in contact with the front end of the permanent magnet 14 to suppress the influence of magnetic leakage to the LVDT. Further, in the present embodiment, the density of a magnetic flux directed toward the LVDT is suppressed by regarding the total length L of the permanent magnet 14 in the longitudinal direction of the permanent magnet 14 as 100, setting the division ratio of the first magnet 14A and the first magnet 14B to 35:65, and making a length 14A1 of the first magnet 14A in the longitudinal direction shorter than a length 14B1 of the second magnet 14B in the longitudinal direction. Lengths of the first coil 16A and the second coil 16B in the central axis X direction are set to a minimum length in consideration of an effective stroke length of the voice coil (: bobbin 15, coil 16), since it is meaningless for each coil to be present outside ranges of magnetic fluxes generated by the corresponding first magnet 14A and second magnet 14B.

In addition, a gap g in the central axis X direction where no coil is formed is provided between the first coil 16A and the second coil 16B. The gap g corresponds to the effective stroke length K of the voice coil. This is due to the fact that, as illustrated in Fig. 2(a), each of the coils (16A, 16B) does not enter a reverse polarity section during a stroke in the front/rear direction of the bobbin 15. That is, as illustrated in Fig. 2(c), for example, when the bobbin 15 moves rearward by a stroke distance K/2, if the rear end of the first coil 16A exceeds the position of the rear end of the first magnet 14A in a state in which the gap g is not provided, thrust rt in the opposite direction to thrust at of the first coil 16A is generated, and the total thrust with the thrust bt of the second coil 16B is reduced. As illustrated in Fig. 2(b), the rear end of the first coil 16A is set not to exceed the position of the rear end of the first magnet 14A when the bobbin 15 moves rearward, and in the stroke neutral state illustrated in Fig. 1(a), the first coil 16A has a length such that the rear end of the first coil 16A is located on the front side by a distance of g/2 from the position of the rear end of the first magnet 14A. Similarly, the front end of the second coil 16B is set not to exceed the position of the front end of the second magnet 14B when the bobbin 15 moves frontward by a stroke distance of K/2. In the stroke neutral state, the second coil 16B has a length such that the front end of the second coil 16B is located on the rear side by a distance of g/2 from the position of the front end of the second magnet 14B. As a result, the gap g is provided between the rear end of the first coil 16A and the front end of the second coil 16B.

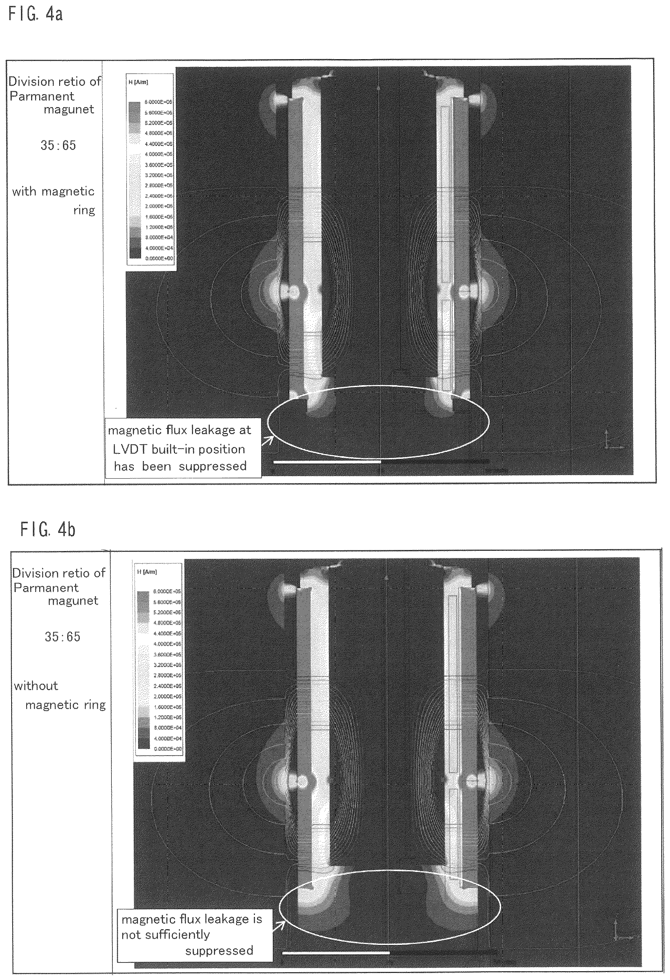

Therefore, a magnetic field distribution in the linear motor 10 according to the present embodiment was analyzed. Fig. 4(a) illustrates results of the analysis, and Fig. 4(b) illustrates, as a comparative example, results of analyzing a magnetic field distribution in a case where the magnetic ring 19 is not present in the same configuration. In each of the diagrams of the magnetic field distributions, the inside of an ellipse on the lower side of the diagram corresponds to an LVDT-built-in region.

The analysis of the magnetic fields was performed by simulation using the analysis software ANSYS Electoronics Desktop 2019 R2 Maxwell3D/Maxwell2D. Analysis conditions were that thrust: axial force acting on the coils was calculated, boundary conditions: 3D is an insulating boundary (Insulating) and 2D is a balloon (ballon), and a calculation region: the region is twice as spacious as an analysis model in each direction of XYZ from the coordinate center. In addition, set main parameters of each member are as follows.

First, regarding the material of each member, the exterior member 11 and the inner yoke 12 were made of free-cutting pure iron (ME1F), the LVDT case member 17 was made of SUS, the permanent magnet 14 was formed of a neodymium magnet (N48H or a product equivalent to N48HT), the coil 16 was formed of a polyester coated conductor (PEW) having a diameter of 0.5 mm, and the magnetic ring 19 was made of free-cutting pure iron (ME1F). In addition, in the present embodiment, the bobbin 15 was made of aluminum. In addition, the bobbin 15 can also be made of synthetic resin, for example, polyphenylene sulfide resin (PPS) containing 30% glass. It is assumed that a copper pipe (C1100) is arranged on the inner circumference of the permanent magnet 14.

In addition, the total length L of the permanent magnet 14 in the longitudinal direction is 100, and regarding dimension ratios of the members, the outer diameter y1 of the exterior member 11 is 67.7, the outer diameter y2 of the inner yoke 12 is 38, the outer diameter M of the permanent magnet 14 is 60, the outer diameter B of the bobbin 15 and the coil 16 is 50, the outer diameter R1 of the magnetic ring 19 is 60, the inner diameter R2 of the magnetic ring 19 is 48, and the length z of the magnetic ring 19 in the central axis X direction is 4.3. In addition, the distance y3 of the LVDT-built-in region in the central axis X direction of the LVDT case member 17 is 41.3.

As is apparent from the results illustrated in Figs. 4(a) and 4(b), in the linear motor 10 according to the present embodiment, leakage of a magnetic flux to an LVDT-built-in position is reliably suppressed by the presence of the magnetic ring 19.

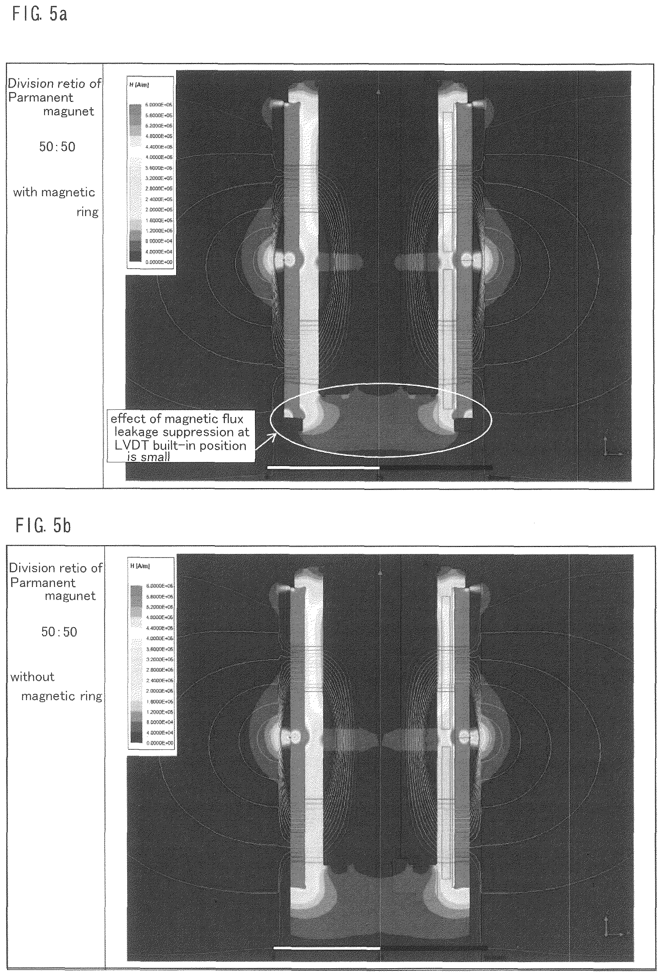

Figs. 5(a) and 5(b) illustrate results of analyzing a magnetic field distribution in a linear motor 20 illustrated in Fig. 3 as a comparative example in a case where the magnetic ring 19 is present and in a case where the magnetic ring 19 is not present, respectively. The linear motor 20 illustrated in Fig. 3 has a configuration common to that of the linear motor 10 illustrated in Figs. 1, except that a division ratio of a first magnet 24A and a second magnet 24B in a longitudinal direction of the permanent magnet 24 is 50:50. Therefore, in Fig. 3, parts common to those illustrated in Figs. 1 are denoted by the same reference signs.

From the analysis results illustrated in Figs. 5, the magnetic ring 19 has a slight effect of suppressing leakage magnetic flux at the LVDT-built-in position. Furthermore, when compared with Fig. 4, it can be seen that the effect of suppressing leakage magnetic flux by the magnetic ring 19 is greatly improved by setting the division ratio in the longitudinal direction of the permanent magnet such that the first magnet shorter is shorter than the second magnet.

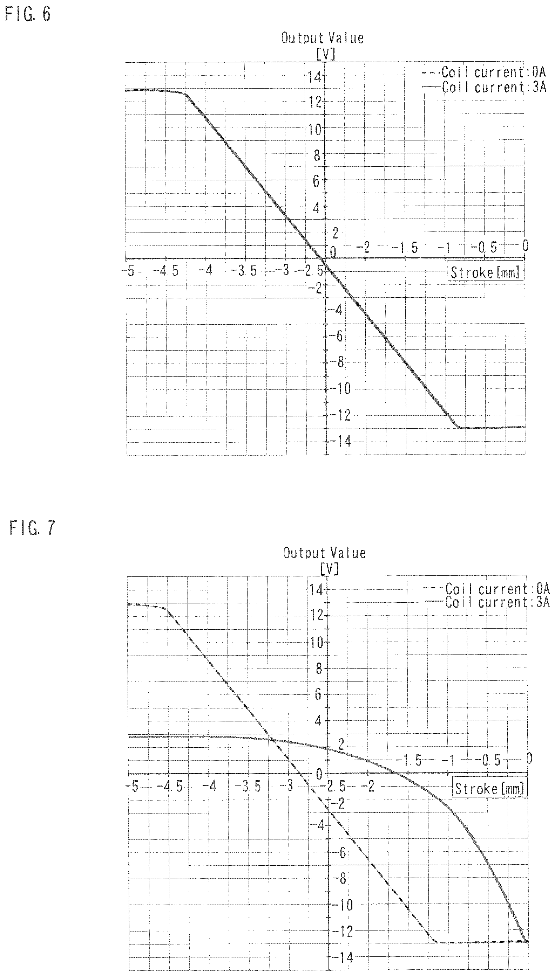

In addition, Fig. 6 is a line graph illustrating LVDT characteristics in the linear motor 10 according to the present embodiment. Fig. 7 is a line graph illustrating LVDT characteristics in a case where the magnetic ring is not present as a comparative example. In each of the line graphs, a stroke distance (mm) of the core C is plotted on a horizontal axis, and an output value (V) is plotted on a vertical axis. Output values in a case where the core C is mechanically moved in an energized state (current 3 A) and a non-energized state of the coil 16 are indicated by a solid line and a broken line.

In a case where the magnetic ring 19 is not present in Fig. 7, even when the amounts of the mechanical movement of core C are the same, a difference between the output values of the LVDT occurs due to the influence of leakage magnetic flux when the coil is energized. However, as illustrated in Fig. 6, such a difference does not occur in a case where the magnetic ring 19 is present. That is, in the energized state (current of 3 A) and the non-energized state of the coil 16, when the amounts of the mechanical movement of core C are the same, the outputs of the LVDT match, and it can be seen that the influence of leakage magnetic flux to the LVDT is suppressed by the magnetic ring 19 in the present embodiment.

As described above, according to the linear motor 10 according to the present embodiment, even in a case where the LVDT is built in the region adjacent to the permanent magnet 14, the magnetic ring 19 made of the soft magnetic material is arranged at the end of the permanent magnet 14, the proportion of the first magnet 14A closer to the LVDT is lower than that of the second magnet 14B in the total length of the permanent magnet 14 in the longitudinal direction of the permanent magnet 14, and thus the influence of leakage magnetic flux to the LVDT can be suppressed well. Therefore, a large intermediate block for LVDT arrangement that leads to an increase in the size of the device does not need to be disposed between the voice coil and the valve body, and the LVDT-built-in linear motor can be downsized and can produce high thrust.

The members of the linear motor of the present invention are not limited to the materials used in the above-described embodiment, and it can be said that the materials can be replaced with other materials as long as the other materials have similar characteristics to the materials.

### Industrial Applicability

The LVDT-built-in linear motor according to the present invention can be used not only as the drive unit of the linear motion servo valve that requires high responsiveness, but also by being incorporated into various precision fine movement mechanisms that require high-speed drive and high-precision positioning.

### List of Reference Signs

10, 20, 30: linear motor
11, 31: exterior member
12, 32: inner yoke
13, 33: annular space
14, 24, 34: permanent magnet
14A, 24A: first magnet
14B, 24B: second magnet
14p: divided part
15, 35: bobbin
15P, 35P: protrusion
16, 36: coil
16A: first coil
16B: second coil
g: gap between first coil and second coil
K: effective stroke length
at: thrust of first coil
rt: thrust of opposite direction to thrust at
bt: thrust of second coil
17: LVDT case member
18: hollow hole
19: magnetic ring
S1: primary coil
S2: secondary coil
C: core
X: central axis
L: total length of permanent magnet in longitudinal direction
14Al: length of first magnet in longitudinal direction
14Bl: length of second magnet in longitudinal direction
y1: outer diameter of exterior member
y2: outer diameter of inner yoke
y3: distance of LVDT-built-in region
M: outer diameter of permanent magnet
B: outer diameter of bobbin
R1: outer diameter of magnetic ring
R2: inner diameter of magnetic ring
z: length of magnetic ring in central axis direction
40: spool
50: valve body

## Claims

1. An LVDT-built-in linear motor comprising:
an exterior member; and
an inner yoke disposed at a center part of an inner space of the exterior member, wherein
in a space formed between the exterior member and the inner yoke, a permanent magnet fixed inside the exterior member, a bobbin made of a non-magnetic material and disposed on an inner side of the permanent magnet and an outer side of the inner yoke such that the bobbin is capable of linearly moving, and a coil wound around an outer circumference of the bobbin are arranged, and the linear motor drives a drive unit of a hydraulic device so as to cause the drive unit to reciprocate via the bobbin that is linearly moved together with the coil by control of energization to the coil,
the inner space of the exterior member, the inner yoke, the bobbin, and the coil each have a substantially cylindrical shape and are arranged coaxially with each other,
the permanent magnet is divided into two in a longitudinal direction of the permanent magnet, and one of which is a first magnet disposed on a proximal side of the hydraulic device and the other of which is a second magnet disposed on a distal side of the hydraulic device,
the coil includes a first coil and a second coil that are spaced apart from each other,
the first coil and the second coil are formed by winding coil wires in opposite directions, and the first magnet and the second magnet have magnetic pole directions opposite to each other in a radial direction,
the bobbin includes a cylindrical body having an outer circumference around which the first coil and the second coil are wound, and a protrusion that extends in a substantially cone shape from an edge of the cylindrical body and transmits the linear motion to the drive unit of the hydraulic device at a tip portion of the protrusion,
an LVDT case member in which solenoid coils constituting a linear variable differential transformer (LVDT) are built in a region in front of an end of the first magnet closer to the hydraulic device is projected at an end of the inner yoke on a hydraulic device side,
a core of the linear variable differential transformer that linearly moves inside the solenoid coils built in the LVDT case member as the bobbin linearly moves is coupled to the protrusion of the bobbin, and
the linear motor further comprises a magnetic ring made of a soft magnetic material and disposed in contact with the end of the first magnet closer to the hydraulic device.

2. The LVDT-built-in linear motor according to claim 1, wherein a length of the first magnet is shorter than a length of the second magnet in the longitudinal direction of the cylindrical permanent magnet.

3. The LVDT-built-in linear motor according to claim 2, wherein in a case where a total length of the cylindrical permanent magnet in the longitudinal direction is 100, a division ratio of the first magnet and the second magnet in the longitudinal direction of the cylindrical permanent magnet is 35:65.

4. The LVDT-built-in linear motor according to any one of claims 1 to 3, wherein the first magnet and the second magnet are each formed by combining a plurality of partial magnets magnetized in a predetermined direction in an annular shape in a circumferential direction.
